# EUROPEAN PATENT APPLICATION

(11) **EP 1 743 727 A1**
(43) Date of publication of application: **17.01.2007**
(21) Application number: 06013252.9
(22) Date of filing: 27.06.2006
(51) Int. Cl.: B23K 26/16, B23K 26/42, B23K 26/14

(54) **Laser processing machine with a processing head having a nozzle hole closing means**

(30) Priority: 12.07.2005 JP 2005202878
(71) Applicant: FANUC LTD, Minamitsuru-gun, Yamanashi 401-0597 (JP)
(72) Inventor: Kubo, Yoshitaka Room 12-503, Minamitsuru-gun Yamanashi 401-0511 (JP); Shiomi, Toshiyasu, Minamitsuru-gun Yamanashi 401-0301 (JP)
(74) Representative: Thum, Bernhard

(57) **Abstract**

A laser processing machine, for processing a work by irradiating a laser beam, is provided which includes: a processing head (16) in which a nozzle hole (41) for passing the laser beam passes is formed; a focusing optical system (13), which is held in the processing head, for focusing the laser beam; and a nozzle hole closing means (30) for closing the nozzle hole at the time of not using the laser processing machine. Due to the foregoing, it is possible to prevent optical components of the focusing optical system from being deteriorated by dust and moisture floating in the air, that is, it is possible to prevent the focusing characteristic from being deteriorated, and the processing performance of the laser processing machine can be excellently maintained high. The nozzle hole closing means (30) may be rotated by a drive means (31,35) so that the nozzle hole (41) can be closed. The nozzle hole closing means (30) may be arranged at a predetermined position of the laser processing machine. Alternatively, the nozzle hole closing means (30) may be arranged at a predetermined position on a work holding means.

## Description

### BACKGROUND OF THE INVENTION

### 1. Field of the Invention

The present invention relates to a laser processing machine for conducting laser processing, such as laser cutting, using a laser output from a laser oscillator.

### 2. Description of the Related Art

A commonly used laser device includes: a laser oscillator for outputting a laser beam; and a laser processing machine for processing a work with the thus outputted laser beam. In the laser processing machine, the laser beam outputted from the laser oscillator is condensed onto the work by a focusing lens provided in a processing head. Using this laser beam, laser cutting or laser welding is conducted on the work.

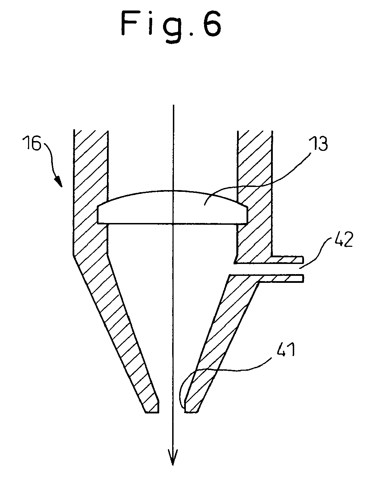

Fig. 6 is an enlarged sectional view, in the longitudinal direction, showing a processing head used for a laser processing machine of the prior art. A laser beam, which has passes through a focusing lens 13 held by a processing head 16, is irradiated from a nozzle hole 41 of the processing head 16 onto a work, not shown. Due to the foregoing, the work is subjected to laser processing. An assist gas supply port 42 is formed at a position of the processing head 16 between the focusing lens 13 and the nozzle hole 41. In order to form a gap in the work, when the laser beam is irradiated, an assist gas at an appropriate pressure is supplied from the assist gas supply port 42 into the processing head 16.

In this connection, at the time of laser processing, spatter or dust, which will be referred to as dust and others hereinafter, is scattered from the work in some cases. The thus scattered dust and others may enter the processing head 16 through the nozzle hole 41. When the dust and others are attached onto a surface of the focusing lens 13 of the processing head 16, the focusing characteristic of the focusing lens 13 is deteriorated, and it becomes impossible to maintain an excellent laser processing performance. In this connection, an assist gas, which is supplied from the assist gas supply port 42 into the inside of the processing head 16, is blown toward the work through the nozzle hole 41. Therefore, at the time of laser processing, dust and others are prevented from attaching to the focusing lens 13.

Japanese Unexamined Patent Publication No. 5-277781 discloses a laser processing machine in which assist gas is blown out for a predetermined period of time even after the completion of laser processing, that is, even after the completion of laser beam irradiation. In this case, even after the completion of laser processing, dust and others can be prevented from attaching to the focusing lens 13.

However, in an actual working site, dust and others, which have been produced at the time of laser processing, float in the air all through the day. Accordingly, there is a possibility that dust and others may enter the processing head 16 from the nozzle hole 41 and attach to the focusing lens 13 after the completion of laser processing or even after the completion of blowing the assist gas after the completion of laser processing. When the assist gas blowing time after the completion of laser processing is considerably extended in the laser processing machine disclosed in Japanese Unexamined Patent Publication No. 5-277781, it is possible to prevent dust and others being attached to the focusing lens 13. However, this case is very expensive because the assist gas must be continuously blown out.

In the case where the laser oscillator is a carbon dioxide gas laser, and as a carbon dioxide gas laser beam tends to be absorbed by the moisture contained in the air, in the case where the moisture is attached to a surface of the focusing lens 13 of the laser processing machine, a heat value of the focusing lens 13 is increased and the focusing characteristic is deteriorated.

Further, manufacturers of optical parts, such as a focusing lens 13 and others, recommend keeping the optical parts in desiccators, the temperature and humidity of which are properly controlled, for the reason that the optical parts are deteriorated when they are exposed to a high temperature and high humidity environment. However, in an actual working site, even while the laser processing machine is not being used, the focusing lens 13 is held in the processing head 16. That is, the focusing lens 13, which is held in the processing head 16, is exposed to the atmosphere through the nozzle hole 41 at all times. Therefore, the focusing lens 13 is gradually deteriorated by the moisture contained in the air flowing into the processing head 16 from the nozzle hole 41. Accordingly, as long as the focusing lens 13 is held in the processing head 16, the product life of the focusing lens 13 is shortened.

The present invention has been accomplished in view of the above circumstances. An object of the present invention is to provide a laser processing machine capable of preventing the optical parts of the processing head and, for example, the focusing lens, from being deteriorated even when the laser processing machine is not used.

### SUMMARY OF THE INVENTION

According to the first embodiment for accomplishing the above object, a laser processing machine for processing a work by irradiating a laser beam includes: a processing head in which a nozzle hole for passing through the laser beam is formed; a focusing optical system, which is held in the processing head, for focusing the laser beam; and a nozzle hole closing means for closing the nozzle hole.

In the first embodiment, as the nozzle hole of the processing head can be closed by the nozzle hole closing means after the laser processing machine has been used, dust and others can be prevented from flowing into the processing head through the nozzle hole. Therefore, the laser processing machine can maintain an excellent processing performance without polluting the focusing optical system (optical parts) of the processing head and, for example, without polluting a focusing lens, a reflection type parabolic mirror and a protective window by the dust and others. It is also possible to prevent the moisture in the air from flowing into the processing head through the nozzle hole. Therefore, it is possible to prevent deterioration of the focusing characteristic caused by moisture which attaches to the optical parts. It is also possible to prevent deterioration of the focusing optical system caused by moisture which attaches to the optical parts.

According to the second embodiment, in the first embodiment, the nozzle hole closing means is rotatably attached to the processing head. Further, the laser processing machine includes a drive means for rotating the nozzle hole closing means so that the nozzle hole can be closed.

That is, according to the second embodiment, by rotating the nozzle closing means, the nozzle hole can be simply and easily closed. In this connection, a rotating axis of the nozzle hole closing means may be parallel to or perpendicular to the optical path of the laser beam.

According to the third embodiment, in the first embodiment, the nozzle hole closing means is fixed at a predetermined position of the laser processing machine. Further, the laser processing machine includes a processing head moving means for moving the processing head, and the processing head is moved by the processing head moving means so that the nozzle hole can be closed by the nozzle hole closing means.

That is, according to the third embodiment, the processing head is moved to the nozzle hole closing means by the processing head moving means of the laser processing machine so that the nozzle hole can be closed, without employing a separate drive means with respect to the nozzle hole closing means.

According to the fourth embodiment, in the first embodiment, the laser processing machine includes a holding means for holding the work, and the nozzle hole closing means is fixed at a predetermined position with respect to the holding means. Further, the laser processing machine includes a relative movement means for relatively moving the processing head and the holding means, and the processing head and the holding means are relatively moved by the relative movement means so that the nozzle hole can be closed by the nozzle hole closing means.

That is, according to the fourth embodiment, the processing head is moved to the nozzle hole closing means by the relative movement means for relatively moving the processing head movement means of the laser processing machine and the holding means so that the nozzle hole can be closed without employing a separate drive means with respect to the nozzle hole closing means.

According to the fifth embodiment, in one of the first to the fourth embodiments, the laser processing machine includes a purge means for purging the inside of the processing head by a purge gas before the nozzle hole is closed by the nozzle hole closing means.

That is, according to the fifth embodiment, after the moisture and dust contained in the air remaining inside the processing head have been discharged, the nozzle hole is closed by the nozzle hole closing means. Therefore, the dust and others or the moisture cannot remain in the processing head.

According to the sixth embodiment, in the fifth embodiment, the purge means is an assist gas supply means for supplying an assist gas used for laser processing.

That is, according to the sixth embodiment, the purge means can be formed by a relatively simple structure.

According to the seventh embodiment, in the first to the sixth embodiment, the laser processing machine further includes a pressurizing means for pressurizing the inside of the processing head at a higher pressure than the atmospheric pressure under the condition that the nozzle hole is closed by the nozzle hole closing means.

That is, according to the seventh embodiment, when the pressure in the processing head is raised to be higher than the atmospheric pressure, the dust and others and the moisture contained in the outside air can be prevented from flowing into the processing head.

According to the eighth embodiment, in the seventh embodiment, the pressurizing means is an assist gas supply means for supplying an assist gas used for laser processing.

That is, according to the eighth embodiment, the pressurizing means can be formed by a relatively simple structure.

According to the ninth embodiment, in the first to the eighth embodiment, the nozzle hole closing means is made of a material, the water permeability of which is very low.

That is, according to the ninth embodiment, it is possible to prevent the moisture in the atmospheric air from entering the processing head through the nozzle hole closing means.

From the detailed explanation of the typical embodiment, and as shown in the accompanying drawings of the present invention, the object, characteristic and advantage of the present invention will be made more clear.

### BRIEF DESCRIPTION OF THE DRAWINGS

In the drawings:
Fig. 1 is a schematic illustration showing a laser device having a laser processing machine of the present invention;
Fig. 2 is an enlarged sectional view in the longitudinal direction of a processing head of a laser processing machine of the first embodiment of the present invention;
Fig. 3 is an enlarged sectional view in the longitudinal direction of a processing head of a laser processing machine of another embodiment of the present invention;
Fig. 4a is a schematic view of a laser processing machine of the second embodiment of the present invention;
Fig. 4b is a schematic view of the laser processing machine shown in Fig. 4a at the time of not using the laser processing machine;
Fig. 5a is a schematic view of a laser processing machine of another embodiment of the present invention;
Fig. 5b is a schematic view of the laser processing machine shown in Fig. 5a at the time of not using the laser processing machine; and
Fig. 6 is an enlarged sectional view in the longitudinal direction of a processing head used for a laser processing machine of the prior art.

### DETAILED DESCRIPTION

By referring to the accompanying drawings, an embodiment of the present invention will be explained below. Like reference characters are used to indicate like parts in the following drawings. In order to facilitate the understanding of the embodiment, various scales are appropriately used in these drawings.

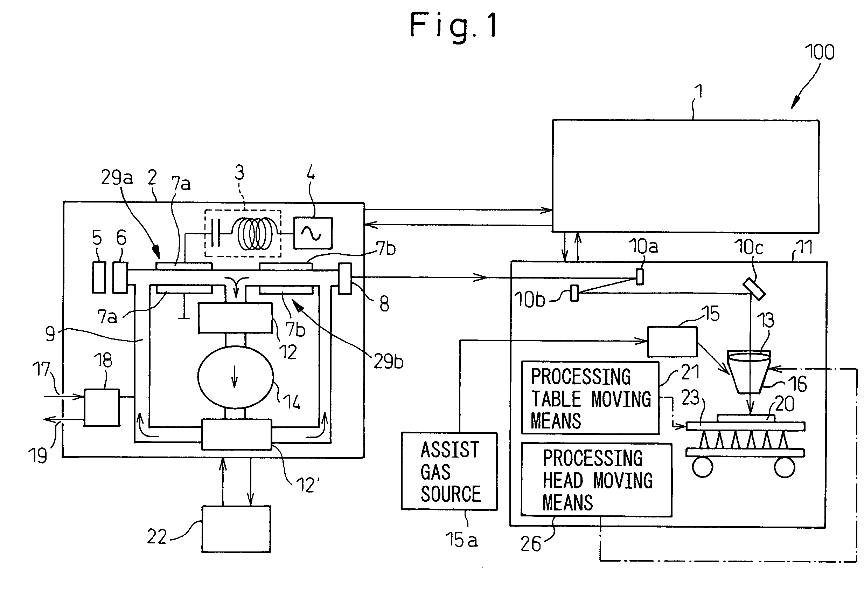

Fig. 1 is a schematic illustration of a laser device of the present invention. The laser device 100 of the present invention is mainly used for metal working and includes a laser oscillator 2 and a laser processing machine 11. As shown in Fig. 1, the laser oscillator 2 and the laser processing machine 11 are electrically connected to each other via a control device 1.

The laser oscillator 2 is a discharge-exciting-type gas laser oscillator, the output of which is relatively high. For example, the laser oscillator 2 is a carbon dioxide gas laser-beam oscillator, the output capacity of which is 1 kW or more. The laser oscillator 2 includes a discharge tube 9 connected to a laser gas pressure control system 18. The laser gas pressure control system 18 can supply laser gas to the discharge tube 9 through a laser gas supply port 17 formed in the laser oscillator 2. Further, the laser gas pressure control system 18 can discharge laser gas from the discharge tube 9 through a laser gas discharge port 19 formed in the laser oscillator 2. At one end portion of the discharge tube 9, a rear mirror 6 (a resonator inside mirror) having partial permeability is provided. At the other end portion of the discharge tube 9, an output mirror 8 having partial permeability is provided. The output mirror 8 is made of ZnSe. An inner face of the output mirror 8 is covered with a partial reflection coating, and an outer face of the output mirror 8 is covered with a anti-reflection coating. On a back face of the rear mirror 6, a laser power sensor 5 is arranged. As shown in the drawing, in an optical resonator formed between the rear mirror 6 and the output mirror 8, two discharge sections 29a, 29b are formed.

Each discharge section 29a, 29b includes a pair of discharge electrodes 7a, 7b which are arranged while the discharge tube 9 is interposed between the pair of discharge electrodes 7a, 7b. These discharge electrodes 7a, 7b have the same size and are metallized or have attached metallic parts. As shown in Fig. 1, the discharge electrode 7a is connected to a laser power source 4 via a matching circuit 3. In this connection, the discharge electrode 7b is also connected to a laser power source via a matching circuit composed in the same manner, however, in order to facilitate the understanding, these components are omitted in the drawing. These laser power sources are respectively independently controlled, and an intensity of electric power supplied to each discharge section 19a, 19b can be freely adjusted.

As shown in the drawing, a blower 14 is arranged in the discharge tube 9. In an upstream and a downstream of the blower, heat exchangers 12, 12' are respectively arranged. Further, the laser oscillator 2 is connected to a cooling water circulating system 22. Therefore, the laser gas charged into the discharge tube 9 can be appropriately cooled.

A laser beam outputted from the output mirror 8 of the laser oscillator 2 is incident upon the laser processing machine 11. The laser processing machine 11 includes a plurality of reflecting mirrors for reflecting the laser beam incident upon it. In the case shown in Fig. 1, the laser processing machine 11 includes three reflecting mirrors 10a, 10b, 10c. As shown in the drawing, the laser beam reflected by these reflecting mirrors 10a, 10b, 10c passes through the focusing lens 13 and the processing head 16 and is irradiated onto a work 20 which is put on a processing table 23. In this case, the focusing lens 13 is made of ZnSe, and both sides of the focusing lens 13 are coated with a anti-reflection coating. In this connection, although not shown in the drawing, instead of the focusing lens 13, other focusing optical systems, such as a reflecting type parabolic mirror, a protective window and a parabolic mirror, may be employed.

A processing table 23 is moved in the horizontal direction by a processing table moving means 21, so that the work 20 can be positioned at a desired position. In the same manner, the processing head 16 is moved in both the horizontal and the vertical direction by a processing head moving means 26 and is positioned at a desired position. Further, as shown in Fig. 1, the laser processing machine 11 includes an assist gas supply system 15. Assist gas, which is sent from an assist gas source 15a provided outside the laser processing machine 11, is supplied into the processing head 16 by the assist gas supply system 15. Assist gas held in the assist gas source 15a may be an inert gas such as nitrogen gas. Alternatively, assist gas preserved in the assist gas source 15a may be dry air.

At the time of operation of the laser device 100, laser gas is supplied into the discharge tube 9 through the laser gas supply port 17 by the laser gas pressure control system 18. Next, the laser gas is circulated in a circulating passage, which is made up of the discharge tube 9, by a blower 14. As shown by arrows in Fig. 1, the laser gas sent out by the blower 14 passes through a heat exchanger 12' for removing the compression heat and is supplied to each discharge section 29a, 29b.

When a predetermined voltage is applied and, for example, when an AC voltage of several hundred kHz to several ten MHz is applied upon the discharge electrodes 7a, 7b in the discharge sections 29a, 29b, the laser gas is excited in the discharging. Due to the foregoing, a laser beam is generated. By the well known principle, the thus generated laser beam is amplified in an optical resonator and transmitted through the output mirror 8. Laser gas, the temperature of which has been raised by the discharging, is cooled by the heat exchanger 12 and returned again to the blower 14. In this connection, the cooling water circulating system 22 is operated at this time. Therefore, the laser gas in the discharge tube 9 is cooled.

The laser beam outputted from the output mirror 8 is supplied from the laser oscillator 2 to the laser processing machine 11 as shown in the drawing. In the laser processing machine 11, the laser beam is appropriately reflected by three reflecting mirrors 10a, 10b, 10c. The thus reflected laser beam is condensed by the focusing lens 13 and irradiated onto the work 20 through the processing head 16. Due to the foregoing, the work 20 on the working table 23 can be processed, for example, the work 20 on the working table 23 can be cut or welded.

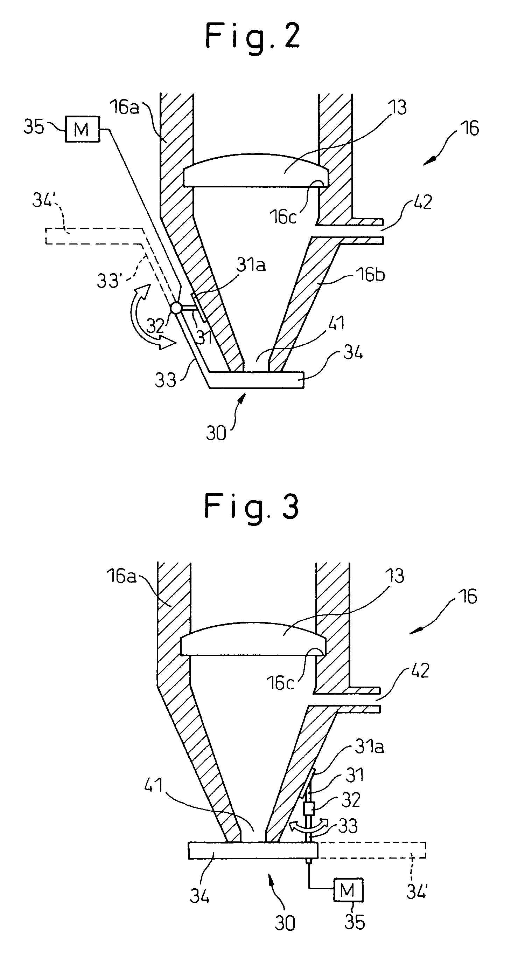

Fig. 2 is an enlarged sectional view in the longitudinal direction of a processing head of a laser processing machine of the first embodiment of the present invention. As shown in Fig. 2, the processing head 16 includes: a cylindrical portion 16a; and a conical portion 16b connected to the cylindrical portion 16a. The cylindrical portion 16a and the conical portion 16b are coaxially arranged, and a nozzle hole 41 is formed at a forward end portion of the conical portion 16b on the central axis of the processing head 16. An optical component, that is, the focusing lens 13 in the case shown in Fig. 2 is held by an annular groove portion 16c formed on an inner circumferential face of the cylindrical portion 16a.

Further, at a position of the processing head 16 located between the focusing lens 13 and the nozzle hole 41, an assist gas supply port 42 is formed. This assist gas supply port 42 is connected to the assist gas supply system 15 shown in Fig. 1. From this assist gas supply port 42, assist gas can be supplied into the processing head 16 by the control of the control device 1. While the laser processing machine 11 is being operated, the assist gas supplied from the assist gas supply port 42 is blown from the nozzle hole 41. Therefore, dust and others and moisture can be prevented from flowing into the processing head 16 through the nozzle hole 41.

In the first embodiment of the present invention, a nozzle hole closing section 30 is provided in the processing head 16. As shown in the drawing, a base 31a of the nozzle hole closing section 30 is fixed onto an outer face of the conical portion 16b. A rotary shaft portion 32 is provided at a forward end portion of a post portion 31 which extends in the substantial horizontal direction from the base 31a. In the first embodiment, a direction of the rotary shaft portion 32 is perpendicular to the longitudinal direction of the processing head 16, that is, a direction of the rotary shaft portion 32 is perpendicular to a direction of the laser beam passage.

A closing lid portion 34 for closing the nozzle hole 41 includes an arm 33 which is integrated with the closing lid portion 34. A forward end portion of this arm 33 is rotatably attached to a rotary shaft portion 32. An angle, which is formed between the arm 33 and the closing lid portion 34, and a length of the arm 33 are determined so that the closing lid portion 34 can close the nozzle hole 41. Further, the rotary shaft portion 32 is connected to a drive portion 35 such as a motor which is controlled by the control device 1. Due to the above structure, between the closing position at which the nozzle hole 41 is closed and the open position 34' at which the nozzle hole 41 is opened, the closing lid portion 34 can be rotated round the rotary shaft portion 32 together with the arm 33.

As described before, in the case where moisture is attached onto a surface of the focusing lens 13, the focusing characteristic is lowered and, at the same time, the focusing lens 13 is deteriorated. For the above reasons, it is preferable that the closing lid portion 34 is made of a material, the moisture permeability of which is very low. Due to the foregoing, it is possible to prevent the occurrence of a problem that, even when the closing lid portion 34 closes the nozzle hole 41, the moisture in the air permeates through the closing lid portion 34 and enters into the processing head 16. In order to ensure the air-tightness round the nozzle hole 41 at the time of closing the closing lid portion 34, it is preferable that the closing lid portion 34 is made of elastic material such as resin. A seal member (not shown) corresponding to the nozzle hole 41, may be attached onto a surface of the closing lid portion 34.

In the present invention, after the work 20 has been processed by the laser processing machine 11, the drive section 35 is driven through the control device 1. Due the drive of the drive section 35, the closing lid portion 34 is rotated from the open position 34' to the closed position shown in Fig. 2. Accordingly, the nozzle hole 41 of the processing head 16 can be closed by the closing lid portion 34. That is, according to the present invention, when the closing lid portion 34 is rotated, the nozzle hole 41 can be simply and easily closed. Due to the foregoing, in the present invention, it is possible to prevent dust and others, which float in the air, from flowing into the processing head 16 through the nozzle hole 41. Therefore, in the present invention, dust and others can be prevented from attaching onto the focusing lens 13 of the processing head 16. Accordingly, the focusing characteristic of the focusing lens 13 is not lowered. For the above reason, when the laser processing machine 11 is used in the next operation, it is possible to ensure an excellent processing performance.

Further, according to the present invention, when the closing lid portion 34 is used, it is possible to prevent the moisture in the air from flowing into the processing head 16 through the nozzle hole 41. Therefore, it is possible to prevent the deterioration of the focusing characteristic of the focusing lens 13 caused by the moisture contained in the air. It is also possible to prevent the deterioration of the focusing lens 13 caused by the moisture contained in the air.

In the first embodiment shown in Fig. 2, the rotary shaft portion 32 is perpendicular to the optical passage of the laser beam. However, the rotary shaft portion 32 may not be perpendicular to the optical axis of the laser beam. Fig. 3 is an enlarged sectional view in the longitudinal direction of a processing head of a laser processing machine of another embodiment of the present invention. In Fig. 3, the arm 33 extends in the vertical direction from a surface of the closing lid portion 34, and a forward end portion of the arm 33 is rotatably coaxially and attached to the rotary shaft portion 32. In the embodiment shown in Fig. 3, a direction of the rotary shaft portion 32 is parallel with the longitudinal direction of the processing head 16, that is, the direction of the rotary shaft portion 32 is parallel with the direction of the optical passage of the laser beam. When the closing lid portion 34 is rotated from the open position 34' to the closed position by the drive section 35, the nozzle hole 41 can be closed in the same manner as that described before. It will be clear that this embodiment can provide the same effect as that described before. Of course, another form of the nozzle hole closing portion 30 may be employed in which an attaching position for the base 31a is changed or a rotary direction of the closing lid portion 34 is changed.

In this connection, as described before, at the time of laser processing, in order to form a gap in the work 20, assist gas is supplied through the assist gas supply hole 42 into the processing head 16 and is blown from the nozzle hole 41 of the processing hand 16. In an embodiment of the present invention not shown, it is preferable that assist gas is continuously supplied into the processing head 16 for a predetermined period of time even after the laser processing machine 11 has been used. Due to this operation, the air remaining in the processing head 16 is purged by the assist gas. Accordingly, the dust and others and the moisture existing in the processing head 16 can be discharged outside together with the assist gas.

That is, in the present embodiment, the assist gas supply system 15 is used as a purge means. When the nozzle hole 41 is closed by the closing lid portion 34 after the completion of purging, only the assist gas remains in the processing head 16. Therefore, a state in which the inside of the processing head 16 is filled with purge gas can be maintained until the next laser processing operation. That is, it is possible to avoid a case in which dust and others, or moisture, exists in the processing head. Therefore, it is possible to avoid a state in which the focusing lens 13 of the processing head 16 is polluted with dust and others and, further, the moisture attaches to focusing lens 13 of the processing head 16. In this connection, in order to completely discharge the moisture existing in the processing head 16, it is preferable that the assist gas is a dry gas.

In another embodiment not shown in the drawings, it is preferable that, after the laser processing machine 11 has been used, the assist gas is continuously supplied into the processing head 16 for a predetermined period of time and the nozzle hole 41 is closed by the closing lid portion 34, and then the assist gas is supplied again into the processing head 16. Alternatively, while the assist gas is being supplied, the nozzle hole 41 may be closed by the closing lid portion 34 without stopping the supply of the assist gas. In the case where the assist gas is continuously supplied under the condition that the nozzle hole 41 is closed as described above, the assist gas supply system 15 functions as a pressurizing means. Due to the foregoing, the pressure in the processing head 16 is raised to a value higher than the atmospheric pressure. When the pressure in the processing head has been raised to the value higher than the atmospheric pressure, the supply of the assist gas is stopped.

That is, in the present embodiment, the processing head 16 is kept with the situation in which the pressure in the processing head 16 is being kept at a value higher than atmospheric pressure, until the next laser processing operation. In this case, as the pressure of the outside air is lower than the pressure inside the processing head 16, the outside air containing dust and others and moisture can be perfectly prevented from flowing into the processing head 16 through the nozzle hole 41. In this connection, it is difficult to completely seal a portion between the closing lid portion 34 and the nozzle hole 41. Therefore, air in the processing head 16 may leak through the portion between the closing lid portion 34 and the nozzle hole 41. However, even in this case, there is no possibility that outside air will flow into the processing head 16.

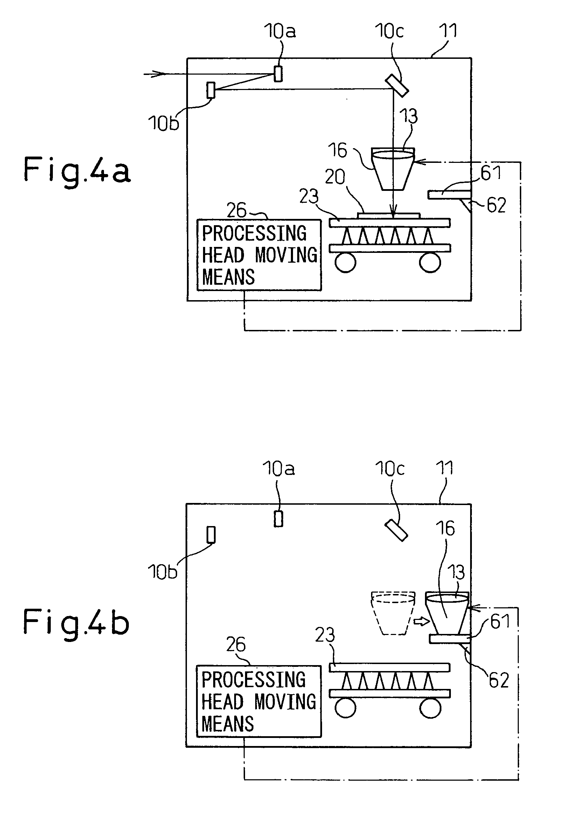

Figs. 4a and 4b are schematic views of a laser processing machine of the second embodiment of the present invention. In the structure shown in these drawings, a closing lid portion 61 is attached to a predetermined portion of the laser processing machine 11 by a bracket 62. The position of predetermined portion of the laser processing machine 11 is not changed in the cases of using and not using the laser processing machine 11. The closing lid portion 61 is the same member as the closing lid portion 34. A different point of the closing lid portion 61 from the closing lid portion 34 is that the arm 33 is not provided in the closing lid portion 61.

As shown in Fig. 4a, when the laser processing machine 11 is used, a processing head moving means 26 and a processing table moving means 21 are driven and the work 20 is processed by a laser beam. In this connection, in Figs. 4a and 4b, in order to simplify the drawing, the processing table moving means 21 is omitted. After the completion of laser processing with respect to the work 20, as shown in Fig. 4b, the processing head 16 is moved to the closing lid portion 61 by the processing head moving means 26. Next, when the processing head 16 is put on the closing lid portion 61, the nozzle hole 41 of the processing head 16 is closed by the closing lid portion 61.

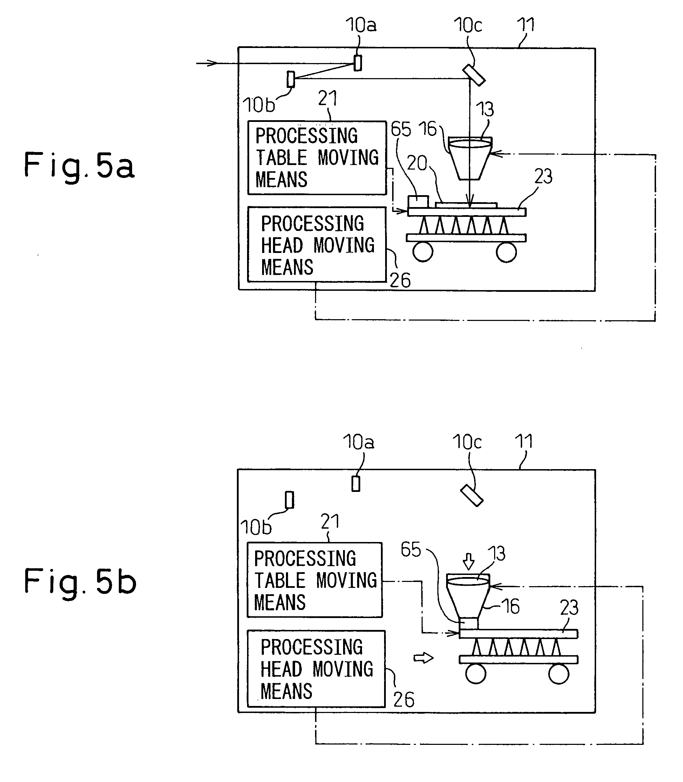

In this connection, the closing lid portion for closing the nozzle hole 41 may not be fixed to a predetermined portion of the laser processing machine 11. Figs. 5a and 5b are schematic views of a laser processing machine of another embodiment of the present invention. In these drawings, the closing lid portion 65 is fixed to a portion of the processing table 23. As can be seen in Fig. 5a, an attaching position of the closing lid portion 65 is determined so that the attached closing lid portion 65 cannot affect the work 20 to be held on the processing table 23. The closing lid portion 65 is the same member as the closing lid portions 34, 61. A different point of the closing lid portion 65 from the closing lid portion 34 is that the closing lid portion 65 is not provided with the arm 33 and/or the bracket 62. In this connection, it is possible to compose the structure in such a manner that a portion of the processing table 23 can directly function as the closing lid portion 65.

After the laser processing of the work 20 has been completed, as shown in Fig. 5b, the processing table 23 is moved in the horizontal direction by the processing table moving means 21, so that the closing lid portion 65 of the processing table 23 can be positioned at a position under the processing head 16. Next, when the processing head 16 is lowered to the closing lid portion 65 by the processing head moving means 26, the nozzle hole 41 of the processing head 16 is closed by the closing lid portion 65. Alternatively, the following procedure may be employed. After the processing head 16 has been lowered to a height of the closing lid portion 65 by the processing head moving means 26, the processing table 23 is moved in the horizontal direction so as to close the nozzle hole 41.

That is, it can be said that the processing table moving means 21 and the processing head moving means 26 are a relatively moving means for relatively moving the processing head 16 and the processing table 23 so as to close the nozzle hole 41.

As described above, in the embodiments shown in Figs. 4a to 5b, it will be clear that the same effect as that explained before, by referring to Fig. 2, can be provided when the nozzle hole 41 of the processing head 16 is closed. In the embodiments shown in Figs. 4a to 5b, the nozzle hole 41 of the processing head 16 is closed by the processing head moving means 26 and/or the processing table moving means 21 which are originally provided in the laser processing machine 11. Therefore, it is unnecessary to use the drive portion 35 (shown in Figs. 2 and 3). Accordingly, in these embodiments, the structure of the laser processing machine 11 is less complicated. Further, an increase in the manufacturing cost can be suppressed.

Of course, a combination, in which some of the above embodiments are appropriately combined with each other, is included in the scope of the claim of the present invention.

The present invention has been explained by referring to typical embodiments. However, it should be noted that variations, omissions and additions can be made, by those skilled in the art, without departing from the scope of the claim of the present invention.

## Claims

1. A laser processing machine (11) for processing a work (20), by irradiating a laser beam, including:
a processing head (16) in which a nozzle hole (41) for passing the laser beam is formed; and
a focusing optical system (13), which is held in the processing head (16), for focusing the laser beam,
**characterized in that** the laser processing machine (11) further including
a nozzle hole closing means (30, 61, 65) for closing the nozzle hole (41).

2. A laser processing machine according to claim 1, wherein the nozzle hole closing means (30) is rotatably attached to the processing head (16), and
the laser processing machine further includes a drive means (35) for rotating the nozzle hole closing means (30) so that the nozzle hole (41) can be closed.

3. A laser processing machine according to claim 1, wherein the nozzle hole closing means (61) is fixed at a predetermined position of the laser processing machine (11),
the laser processing machine further includes a processing head moving means (26) for moving the processing head (16), and
the processing head (16) is moved by the processing head moving means (26) so that the nozzle hole (41) can be closed by the nozzle hole closing means (61).

4. A laser processing machine according to claim 1, wherein the laser processing machine further includes a holding means (23) for holding the work (20),
the nozzle hole closing means (65) is fixed at a predetermined position with respect to the holding means (23),
the laser processing machine furthermore includes a relative movement means (21, 26) for relatively moving the processing head (16) and the holding means (23), and
the processing head (16) and the holding means (23) are relatively moved by the relative movement means (21, 26) so that the nozzle hole (41) can be closed by the nozzle hole closing means (65).

5. A laser processing machine according to one of claims 1 to 4, wherein the laser processing machine further includes a purge means (15) for purging the inside of the processing head (16) with a purge gas before the nozzle hole (41) is closed by the nozzle hole closing means (30).

6. A laser processing machine according to claim 5, wherein the purge means (15) is an assist gas supply means (15) for supplying an assist gas used for laser processing.

7. A laser processing machine according to one of claims 1 to 6, wherein the laser processing machine further includes a pressurizing means (15) for pressurizing the inside of the processing head (16), at a pressure higher than atmospheric pressure, under the condition that the nozzle hole (41) is closed by the nozzle hole closing means (30).

8. A laser processing machine according to claim 7, wherein the pressurizing means (15) is an assist gas supply means (15) for supplying an assist gas used for laser processing.

9. A laser processing machine according to one of claims 1 to 8, wherein the nozzle hole closing means (30) is made of a material, the water permeability of which is very low.
